# EUROPEAN PATENT APPLICATION

(11) **EP 2 278 444 A2**
(43) Date of publication of application: **26.01.2011**
(21) Application number: 10165547.0
(22) Date of filing: 10.06.2010
(51) Int. Cl.: G06F 3/041, G06F 3/01

(54) **Portable terminal**

(30) Priority: 10.06.2009 JP 2009139363
(71) Applicant: Funai Electric Co., Ltd., Daito-shi, Osaka 574-0013 (JP)
(72) Inventor: Miyake, Yasunari, Osaka 574-0013 (JP)
(74) Representative: Schuster, Thomas

(57) **Abstract**

This portable terminal (100) includes a control portion (16) for transmitting a position of a touch panel portion (15) directly or indirectly operated by one of the hands of the user to the other hand of the user by vibrating a portion, corresponding to the operated position of the touch panel portion, of a vibrating portion (13) grasped by the other hand of the user when the user has directly or indirectly operated the touch panel portion with one of his/her hands.

## Description

### BACKGROUND OF THE INVENTION

### Field of the Invention

The present invention relates to a portable terminal, and more particularly, it relates to a portable terminal including a touch panel portion for allowing an input operation and a vibrating portion for generating vibration.

### Description of the Background Art

In general, a portable terminal including a touch panel portion for allowing an input operation and a vibrating portion for generating vibration is disclosed in each of Japanese Patent No. 3949912 and Japanese Patent Laying-Open Nos. 2004-94389, 2003-330618, 2005-149197 and 2004-265281, for example.

The aforementioned Japanese Patent No. 3949912 discloses a portable electronic apparatus (portable terminal) including an operating portion (touch panel portion) for accepting an input operation and a vibration generator (vibrating portion) for supplying vibration to the user. This portable electronic apparatus is so formed that the vibration generator provided thereon vibrates when the user performs an input operation on the operating portion thereby transmitting vibration to at least one of the left hand of the user grasping the portable electronic apparatus and the right hand of the user performing the input operation on the operating portion. Thus, the portable electronic apparatus makes the user sense that he/she has operated the portable electronic apparatus.

The aforementioned Japanese Patent Laying-Open No. 2004-94389 discloses an input/output unit (portable terminal) including a touch panel portion for inputting/outputting information and vibration generating means (vibrating portion) for generating vibration. This input/output unit is so formed that the vibration generating means generates vibration on the side of the touch panel portion when the user performs an input operation on the touch panel portion. Thus, the input/output unit makes the user sense that he/she has operated the touch panel portion.

The aforementioned Japanese Patent Laying-Open No. 2003-330618 discloses an input unit (portable terminal) including a display panel (display portion), a substrate (touch panel portion), including a detector, arranged under the display panel and a vibrator (vibrating portion) for generating vibration. This input unit is so formed that the detector provided on the substrate detects that the user has touched the touch panel portion when the user has performed an input operation on (touched) the touch panel portion. Further, the input unit is so formed that the vibrator vibrates on the basis of the results of the detection thereby transmitting vibration to at least one of the left hand of the user grasping the input unit and the right hand of the user performing the input operation on the input unit. Thus, the input unit makes the user sense that he/she has operated the touch panel portion.

The aforementioned Japanese Patent Laying-Open No. 2005-149197 discloses an input unit (portable terminal) including a touch panel portion for inputting/outputting information, a substrate and an electrostatic actuator (vibrating portion) arranged between the touch panel portion and the substrate. This input unit is so formed that the electrostatic actuator generates vibration on the side of the touch panel portion when the user operates the touch panel portion. Thus, the input unit makes the user sense that he/she has operated the touch panel portion.

The aforementioned Japanese Patent Laying-Open No. 2004-265281 discloses a vibration-responsive touch panel (portable terminal) including a touch panel portion for inputting/outputting information, a vibrator (vibrating portion) for generating vibration and a diaphragm arranged to be held between the touch panel portion and the vibrator. This vibration-responsive touch panel is so formed as to transmit vibration generated by the vibrator to the diaphragm when the user operates the touch panel portion. The vibration transmitted to the diaphragm is further transmitted to the touch panel portion, thereby vibrating the touch panel portion. Thus, the vibration-responsive touch panel makes the user sense that he/she has operated the touch panel portion.

In the portable electronic apparatus described in the aforementioned Japanese Patent No. 3949912, however, it is difficult to make the user realize which position of the operating portion of the portable electronic apparatus he/she has operated, while the portable electronic apparatus can make the user sense that he/she has operated the operating portion thereof.

Also in each of the portable terminals described in the aforementioned Japanese Patent Laying-Open No. 2004-94389 and Japanese Patent Laying-Open Nos. 2003-330618, 2005-149197 and 2004-265281, it is difficult to make the user realize which position of the touch panel portion of the portable terminal he/she has operated, while the portable terminal can make the user sense that he/she has operated the touch panel portion thereof.

### SUMMARY OF THE INVENTION

The present invention has been proposed in order to solve the aforementioned problem, and an object of the present invention is to provide a portable terminal capable of making the user realize which position of a touch panel portion he/she has operated.

A portable terminal according to an aspect of the present invention includes a touch panel portion for allowing a user to directly or indirectly perform an input operation with one of his/her hands, a vibrating portion grasped by the other hand of the user for generating vibration thereby notifying the other hand of the user that he/she has directly or indirectly operated the touch panel portion with one of his/her hands, and a control portion for transmitting a position of the touch panel portion directly or indirectly operated by one of the hands of the user to the other hand of the user by vibrating a portion, corresponding to the operated position of the touch panel portion, of the vibrating portion grasped by the other hand of the user when the user has directly or indirectly operated the touch panel portion with one of his/her hands.

In the portable terminal according to this aspect, as hereinabove described, the control portion transmits the position of the touch panel portion directly or indirectly operated by one of the hands of the user to the other hand of the user by vibrating the portion, corresponding to the operated position of the touch panel portion, of the vibrating portion grasped by the other hand of the user when the user has directly or indirectly operated the touch panel portion with one of his/her hands. Thus, the user can sense the position of the touch panel portion operated by one of his/her hands from the other hand, whereby the portable terminal can make the user not only sense that he/she has operated the touch panel portion but also realize (recognize) which position of the touch panel portion he/she has operated.

In the portable terminal according to the aforementioned aspect, the control portion is preferably so formed as to transmit the position of the touch panel portion directly or indirectly operated by one of the hands of the user to the other hand of the user by varying a vibration pattern of a portion, corresponding to the operated position of the touch panel portion, of the vibrating portion grasped by the other hand of the user in response to at least any of the coordinates of the operated position of the touch panel portion, pressing force and operation contents when the user has directly or indirectly operated the touch panel portion with one of his/her hands. According to this structure, the user can sense the vibration pattern responsive to at least any of the coordinates of the position, the pressing force and the operation contents from the other hand, whereby the user himself/herself can realize at least any of the operated position, the strength of the pressing force and the contents of the operation. Thus, the operability of the portable terminal can be further improved.

In the portable terminal according to the aforementioned aspect, the control portion is so formed as to transmit a position of the touch panel portion subjected to the input operation to the other hand of the user by vibrating a portion, corresponding to the position of the touch panel portion directly or indirectly subjected to the input operation by one of the hands of the user, of the vibrating portion in a first vibration pattern informing the user that he/she has correctly performed the input operation when the user has correctly directly or indirectly performed the input operation on the touch panel portion with one of his/her hands while vibrating the portion, corresponding to the position of the touch panel portion directly or indirectly subjected to the input operation by one of the hands of the user, of the vibrating portion in a second vibration pattern, different from the first vibration pattern, informing the user that he/she has erroneously performed the input operation when the user has erroneously directly or indirectly performed the input operation on the touch panel portion with one of his/her hands. According to this structure, the vibrating portion vibrates in the first vibration pattern when the user has correctly performed the input operation on the touch panel portion, whereby the user can determine that he/she has correctly performed the input operation by realizing (recognizing) the first vibration pattern. When the user has erroneously performed the input operation on the touch panel portion, on the other hand, the vibrating portion vibrates in the second vibration pattern, whereby the user can determine that he/she has erroneously performed the input operation by realizing (recognizing) the second vibration pattern.

In this case, the control portion is preferably so formed as to vary the first vibration pattern and the second vibration pattern from each other by varying the frequency of a voltage or a current applied to the vibrating portion. According to this structure, the control portion can easily make the user realize (recognize) the different vibration pattern by varying the frequency of the voltage or the current applied to the vibrating portion.

In the aforementioned portable terminal having the control portion transmitting the position of the touch panel portion operated by the user to the user through at least any of the coordinates of the operated position of the touch panel portion, the pressing force and the operation contents, the control portion is preferably so formed as to vibrate a portion, corresponding to a pressed position of the touch panel portion, of the vibrating portion grasped by the other hand of the user in response to the magnitude of the pressing force when the user has directly or indirectly pressed the touch panel portion with one of his/her hands. According to this structure, the user can sense the vibration pattern responsive to the magnitude of the pressing force from the other hand, whereby the user himself/herself can realize the magnitude of his/her pressing force.

In this case, the control portion is preferably so formed as to vibrate the portion, corresponding to the operated position of the touch panel portion, of the vibrating portion grasped by the other hand of the user in response to the magnitude of the pressing force with reference to a previously set reference value. According to this structure, the user can sense the vibration pattern responsive to the magnitude of the pressing force from the other hand with reference to the previously set reference value.

The aforementioned portable terminal having the control portion vibrating the portion of the vibrating portion in response to the magnitude of the pressing force with reference to the previously set reference value preferably further includes a display portion for displaying an image, while the control portion is preferably so formed as to display a set screen on which the user can previously set a reference value of the magnitude of vibration of the vibrating portion on the display portion. According to this structure, the user can easily set the reference value of the magnitude of the vibration of the vibrating portion while observing the set screen displayed on the display screen.

In the portable terminal according to the aforementioned aspect, the control portion is preferably so formed as to transmit the position of the touch panel portion operated by one of the hands of the user to the other hand of the user by vibrating the portion, corresponding to the operated position of the touch panel portion, of the vibrating portion grasped by the other hand of the user with a frequency of at least 200 Hz when the user has directly or indirectly operated the touch panel portion with one of his/her hands. According to this structure, the control portion can vary the feeling of the vibration transmitted to the other hand of the user as compared with a case of vibrating the vibrating portion with a frequency of less than 200 Hz.

The portable terminal according to the aforementioned aspect preferably further includes a display portion for displaying an image, while the control portion is preferably so formed as to control the vibrating portion to transmit a position to be operated to the user by previously vibrating a portion, corresponding to the image displayed on the display portion, of the vibrating portion grasped by the other hand of the user. According to this structure, the portion of the vibrating portion corresponding to the image displayed on the display portion so previously vibrates that the user can determine which position of the display portion he/she may operate without observing the image displayed on the display portion, for example.

In this case, the control portion is preferably so formed as to vibrate the portion, corresponding to the operated position of the touch panel portion, of the vibrating portion grasped by the other hand of the user in a vibration pattern different from that for transmitting the position to be operated to the user when the user has directly or indirectly operated the portion corresponding to the image with one of his/her hands after transmitting the position to be operated to the user by previously vibrating the portion, corresponding to the image displayed on the display portion, of the vibrating portion grasped by the other hand of the user. According to this structure, the vibration pattern is varied before and after the user has operated the touch panel portion, whereby the user can easily determine whether or not he/she has operated the touch panel portion by realizing (recognizing) the different vibration pattern.

In the portable terminal according to the aforementioned aspect, the vibrating portion is preferably arranged on a back side grasped by the other hand of the user, and the control portion is preferably so formed as to transmit the position of the touch panel portion directly or indirectly operated by one of the hands of the user to the other hand of the user by vibrating a portion, corresponding to the operated position of the touch panel portion, of the vibrating portion arranged on the back side grasped by the other hand of the user when the user has directly or indirectly operated the touch panel portion with one of his/her hands. According to this structure, vibration of the vibrating portion arranged on the back side can be reliably transmitted to the other hand of the user grasping the vibrating portion, whereby the user can correctly realize (recognize) which position of the touch panel portion he/she has operated.

In the portable terminal according to the aforementioned aspect, the vibrating portion preferably includes a plurality of vibrating elements arranged on the touch panel portion, and the control portion is preferably so formed as to transmit the position of the touch panel portion directly or indirectly operated by one of the hands of the user to the other hand of the user by vibrating the vibrating elements, corresponding to the operated position of the touch panel portion, of the vibrating portion grasped by the other hand of the user when the user has directly or indirectly operated the touch panel portion with one of his/her hands. According to this structure, the user can sense the position of the touch panel portion operated by one of his/her hands through the vibration of the plurality of vibrating elements, whereby the control portion can make the user realize (recognize) that he/she has operated the touch panel portion.

In this case, the control portion is preferably so formed as to singly vibrate one of the plurality of vibrating elements of the vibrating portion or to combinationally vibrate some of the plurality of vibrating elements. According to this structure, the control portion can vary the size of a vibrating region of the vibrating portion, thereby making the user realize (recognize) that he/she has operated the touch panel portion by varying the size of the vibrating region of the vibrating portion.

In the aforementioned portable terminal including the plurality of vibrating elements, the plurality of vibrating elements are preferably arranged in the form of a matrix over the entire region of the touch panel portion in plan view. According to this structure, the position of the touch panel portion operated by the user and the vibrating position of the vibrating elements can substantially coincide with each other in plan view, whereby the user can correctly realize (recognize) which position of the touch panel portion he/she has operated.

In the aforementioned portable terminal including the plurality of vibrating elements, the control portion is preferably so formed as to vibrate the corresponding one of the vibrating elements of the vibrating portion coinciding with the position of the touch panel portion on which the user has performed the input operation in plan view. According to this structure, the control portion can make the user correctly realize (recognize) which position of the touch panel portion he/she has operated.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates the appearance of a portable terminal according to an embodiment of the present invention;
Fig. 2 illustrates the positional relation between a touch panel portion and a vibrating portion of the portable terminal according to the embodiment of the present invention;
Fig. 3 is a sectional view taken along the line 200-200 in Fig. 2;
Fig. 4 is a block diagram showing the circuit structure of the portable terminal according to the embodiment of the present invention;
Fig. 5 illustrates the state of vibration upon an input operation on the touch panel portion of the portable terminal according to the embodiment of the present invention;
Fig. 6 illustrates a set screen for setting a vibration pattern of the vibrating portion of the portable terminal according to the embodiment of the present invention;
Fig. 7 illustrates a selection screen of the portable terminal according to the embodiment of the present invention for accepting a user's selection;
Fig. 8 illustrates an image (moving image) displayed on a display portion of the portable terminal according to the embodiment of the present invention;
Figs. 9 and 10 are flow charts showing an operation, controlling the vibrating portion, of a control portion of the portable terminal according to the embodiment of the present invention;
Fig. 11 illustrates a first modification of the portable terminal according to the embodiment of the present invention having piezoelectric elements arranged on a side portion; and
Fig. 12 illustrates a second modification of the portable terminal according to the embodiment of the present invention having a semicylindrically shaped back surface.

### DESCRIPTION OF THE PREFERRED EMBODIMENTS

An embodiment of the present invention is now described with reference to the drawings.

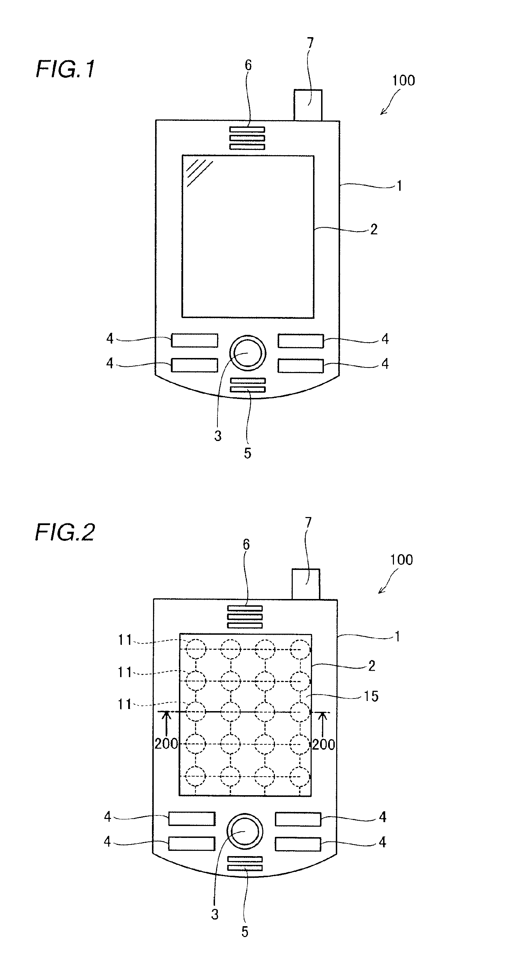

First, the structure of a portable terminal 100 according to the embodiment of the present invention is described with reference to Figs. 1 to 8.

The portable terminal 100 according to the embodiment of the present invention includes a housing 1, a display portion 2 consisting of an LCD (liquid crystal display) panel or the like, a menu button 3 for displaying a menu screen, pushbuttons 4 for allowing various operations, a microphone 5 for inputting sounds, a speaker 6 for outputting sounds and an antenna 7 for receiving/transmitting communication waves, as shown in Fig. 1.

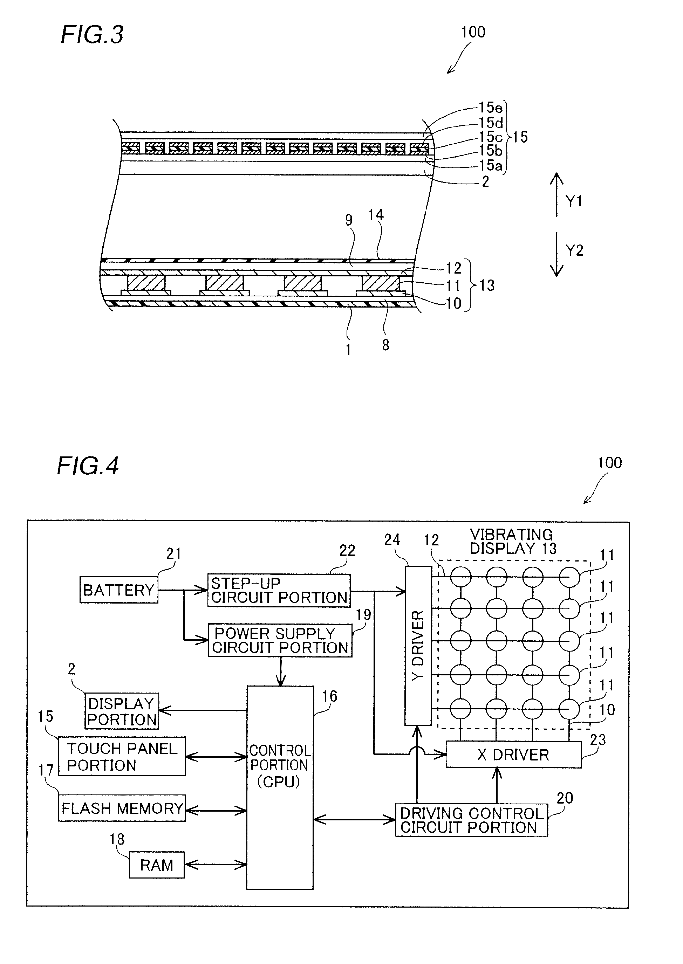

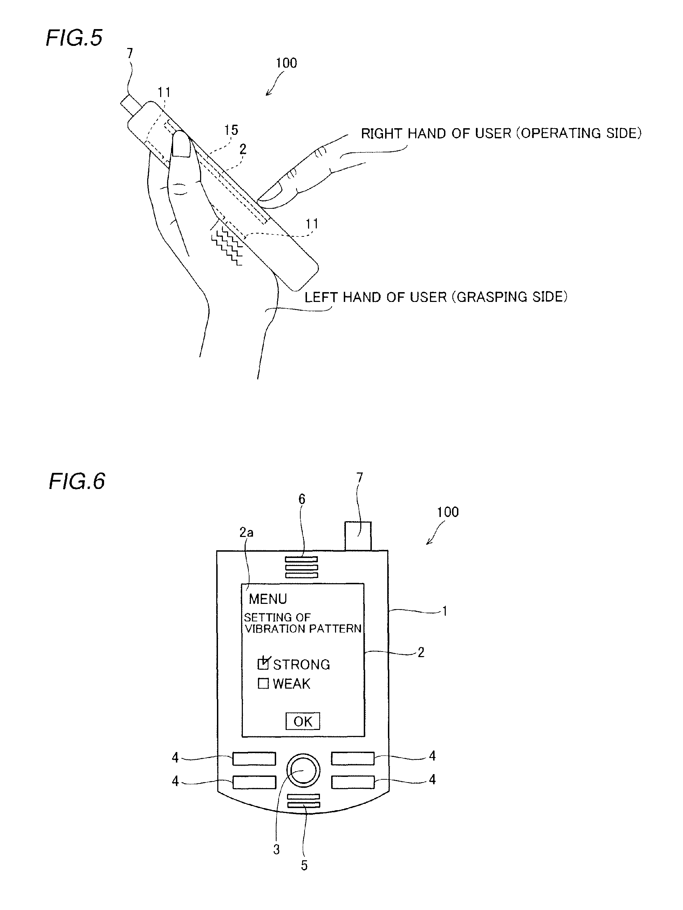

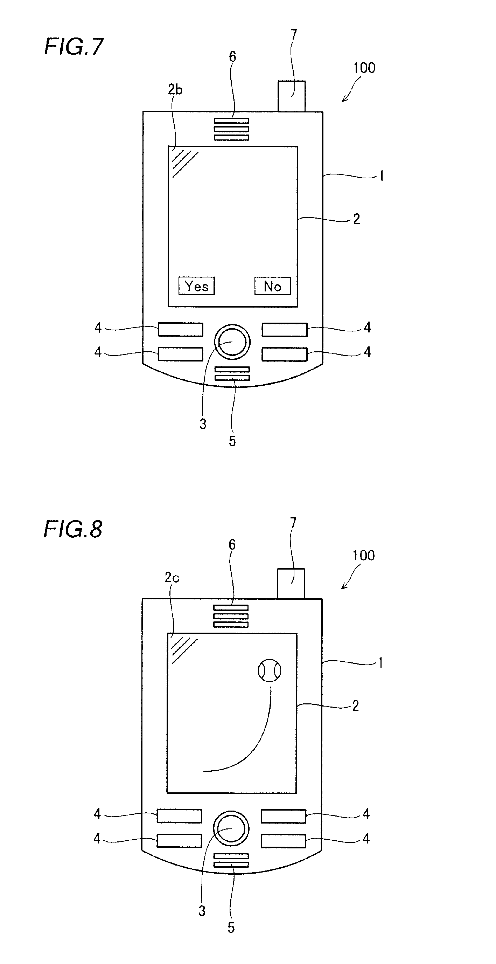

Referring to Fig. 3 showing the sectional structure of the portable terminal 100 in detail, the housing 1 is provided therein with a vibrating display 13, held between substrates 8 and 9, including electrodes 10, piezoelectric elements 11 and an electrode 12 for generating vibration. The vibrating display 13 is an example of the "vibrating portion" in the present invention, and the piezoelectric elements 11 are examples of the "vibrating elements" in the present invention. A buffer member 14 of rubber or the like is provided on the surface of the substrate 9 for suppressing transmission of vibration of the vibrating display 13 along arrow Y1. The display portion 2 is arranged above the buffer member 14 (along arrow Y1). The display portion 2 is so formed as to display a set screen shown in Fig. 6, a selection screen shown in Fig. 7, an image (moving image) shown in Fig. 8 and the like.

A touch panel portion 15 is arranged on the surface of the display portion 2, as shown in Fig. 3. According to this embodiment, the touch panel portion 15 is formed by a capacitance type one, for example. In the capacitance type touch panel portion 15, a substrate 15a is arranged on the surface of the display portion 2. Transparent electrodes 15b made of ITO (indium tin oxide) or the like are formed on the surface of the substrate 15a. Insulating films 15c consisting of SiO₂ films (silicon oxide films) or the like are formed on the surfaces of the transparent electrodes 15b. Transparent electrodes 15d made of ITO (indium tin oxide) or the like are formed on the surfaces of the insulating films 15c. Another substrate 15e is arranged above the transparent electrodes 15d (along arrow Y1).

The aforementioned capacitance type touch panel portion 15 is so formed that a prescribed voltage is previously applied to the transparent electrodes 15b and 15d. When the user presses (performs an input operation on) the surface of the touch panel portion 15 with one of his/her fingers or a dedicated pen, capacitance is generated (the capacitance is changed) between the transparent electrodes 15b and 15d and the finger or the dedicated pin. A detecting portion (not shown) detects the change of the capacitance, thereby detecting which position of the touch panel portion 15 the user has pressed.

The user can grasp the vibrating display 13, provided along arrow Y2 (on the back side), of the portable terminal 100 with one of his/her hands (with the left hand, for example). Further, the user can perform various operations by directly performing the input operation on (touching) the touch panel portion 15, provided along arrow Y1 (on the front side), of the portable terminal 100 with the other hand (with the right hand, for example) or by indirectly performing the input operation with the dedicated pen.

According to this embodiment, the piezoelectric elements 11 of the vibrating display 13 are substantially uniformly arranged in the form of a matrix (in a two-dimensional manner) substantially over the entire region of the touch panel portion 15 in plan view, as shown in Fig. 2.

Referring to Fig. 4 showing the circuit structure of the portable terminal 100 in detail, the portable terminal 100 is provided with a control portion (CPU) 16 for controlling the overall portable terminal 100. The control portion 16 is electrically connected between the display portion 2, the touch panel portion 15, a flash memory 17 for storing data etc., a RAM 18 for temporarily storing data, a power supply circuit portion 19 for supplying power to the control portion 16 and a driving control circuit portion 20 for controlling driving (vibration) of the vibrating display 13.

The portable terminal 100 is also provided with a battery 21. The battery 21 is connected to a step-up circuit portion 22 and the power supply circuit portion 19. The step-up circuit portion 22 has a function of stepping up a voltage supplied from the battery 21 and converting the same to a high voltage. When the battery 21 supplies a voltage of about 3.8 V, for example, the step-up circuit proton 22 steps up this voltage and converts the same to a high voltage of at least 10 V. The high voltage is applied to the vibrating display 13.

The driving control circuit portion 20 is so formed as to transmit driving signals for driving the vibrating display 13 to an X driver 23 and a Y driver 24. The X driver 23 and the Y driver 24 are so formed as to apply a prescribed voltage to the piezoelectric element(s) 11 to be vibrated, thereby driving (vibrating) the piezoelectric element(s) 11 receiving the voltage.

The vibrating display 13 is so formed that AC power is applied to the piezoelectric elements 11 thereof. When AC power having a frequency of at least about 200 Hz and not more than 300 Hz is applied to the piezoelectric elements 11, for example, the vibrating display 13 can more locally provide the user with zapping vibration. When AC power having a frequency of at least about 20 Hz and not more than 100 Hz is applied to the piezoelectric elements 11, on the other hand, the vibrating display 13 can more locally provide the user with trembling vibration. Thus, the portable terminal 100 can vary the vibration pattern by varying the frequency of the AC power (a voltage or a current) applied to the piezoelectric elements 11.

According to this embodiment, the portable terminal 100 is so formed that, when the user performs the input operation on (touches) the touch panel portion 15 with the right hand while grasping the portable terminal 100 with the left hand as shown in Fig. 5, the touch panel portion 15 can detect the position (position coordinates) subjected to the input operation. Further, the portable terminal 100 is so formed as to calculate the position coordinates of the piezoelectric element 11 of the vibrating display 13 corresponding to the detected position coordinates of the touch panel portion 15 and to vibrate the piezoelectric element 11 arranged on the corresponding position. Thus, the portable terminal 100 can transmit the input operation of the touch panel portion 15 to the user by vibrating the portion of the vibrating display 13 corresponding to the portion of the touch panel portion 15 subjected to the input operation by the user. In addition, the portable terminal 100 is so formed that the position of the vibration display 13 subjected to the input operation by the user and the position of vibration of the corresponding piezoelectric element 11 of the vibrating display 13 substantially coincide with each other in plan view. Thus, the portable terminal 100 can correctly transmit the position coordinates of the touch panel portion 15 operated by the right hand of the user to the left hand of the user.

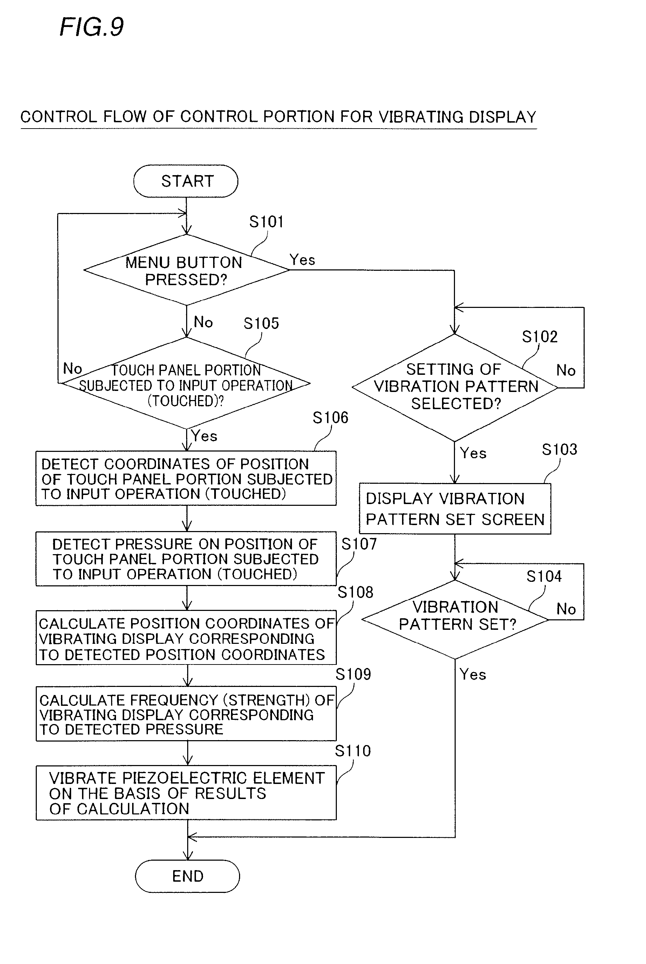

Operations of the control portion 16 of the portable terminal 100 according to this embodiment controlling the vibrating display 13 are now described with reference to Figs. 6 and 9.

As shown in Fig. 9, the control portion 16 determines whether or not the user has pressed the menu button 3 of the portable terminal 100 at a step S101. When determining that the user has pressed the menu button 3 at the step S101, the control portion 16 advances to a step S102. At the step S102, the control portion 16 determines whether or not the user has selected to set the vibration pattern. The control portion 16 repeats this determination at the step S102 until the user selects to set the vibration pattern. When determining that the user has selected to set the vibration pattern at the step S102, the control portion 16 advances to a step S103. At the step S103, the control portion 16 displays a set screen 2a for setting the vibration pattern of the vibrating display 13 on the display portion 2, as shown in Fig. 6. Then, the control portion 16 advances to a step S104.

At the step S104, the control portion 16 determines whether or not the user has set the vibration pattern. The control portion 16 repeats this determination at the step S104 until the user sets the vibration pattern. In the setting of the vibration pattern at the step S104, the user can previously set a reference value (frequency) for vibrating the vibrating display 13. On the set screen 2a shown in Fig. 6, the user can select "strong" so that the vibrating display 13 transmits the zapping vibration to the left hand of the user, or can select "weak" so that the vibrating display 13 transmits the trembling vibration to the left hand of the user.

When determining that the user has not pressed the menu button 3 at the step S101, the control portion 16 advances to a step S105. At the step S105, the control portion 16 determines whether or not the user has performed the input operation on (touched) the touch panel portion 15. When determining that the user has not performed the input operation on (touched) the touch panel portion 15 at the step S105, the control portion 16 returns to the step S101.

When determining that the user has performed the input operation on (touched) the touch panel portion 15 at the step S105, on the other hand, the control portion 16 advances to a step S106. At the step S106, the control portion 16 detects the coordinates of the position of the touch panel portion 15 on which the user has performed the input operation, and advances to a step S107.

At the step S107, the control portion 16 detects the pressure (pressing force) of the user performing the input operation on the touch panel portion 15, and advances to a step S108. When the touch panel portion 15 is formed by the capacitance type one, the control portion 16 detects the pressing force on the basis of the acceleration of the input operation. At the step S108, the control portion 16 calculates the position coordinates of the piezoelectric element 11 corresponding to the position of the touch panel portion 15 on which the user has performed the input operation. Then, the control portion 16 advances to a step S109.

At the step S109, the control portion 16 calculates a frequency and strength for driving the piezoelectric element 11 from the pressing force of the input operation of the user with reference the frequency set in the setting of the vibration pattern. Then, the control portion 16 advances to a step S110. At the step S110, the control portion 16 drives (vibrates) the piezoelectric element 11 on the basis of the results of the calculation at the steps S108 and 109. The piezoelectric element 11 weakly vibrates when the user weakly presses the touch panel portion 15, and strongly vibrates when the user strongly presses the touch panel portion 15. Thus, the user realizes that he/she has performed the input operation on the touch panel portion 15.

The operation of the control portion 16 of the portable terminal 100 according to this embodiment controlling the vibrating display 13 is now described with reference to Figs. 7, 8 and 10. In this control operation, the control portion 16 previously vibrates a piezoelectric element 11 corresponding to a portion displayed on the display portion 2.

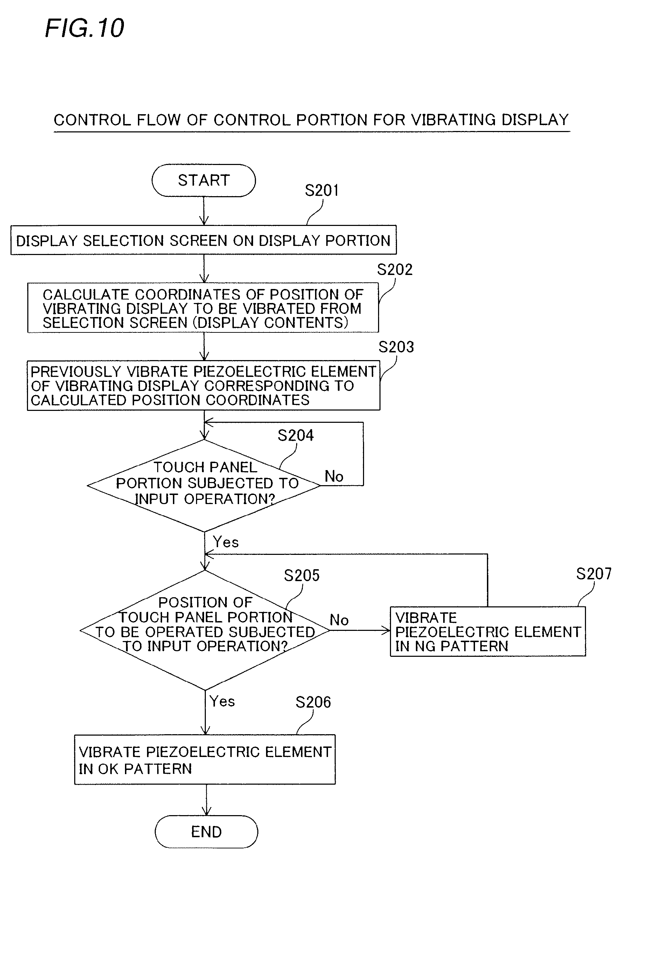

As shown in Fig. 10, the control portion 16 displays the selection screen 2b shown in Fig. 7 on the display portion 2 at a step S201, and advances to a step S202. At the step S202, the control portion 16 calculates the position coordinates of the piezoelectric element 11 of the vibrating display 13 to be vibrated for transmitting a position to be operated to the user from the selection screen 2b displayed on the vibrating display 13, and advances to a step S203. According to this embodiment, the "position to be operated" corresponds to the portion where a "Yes" button or a "No" button is displayed in Fig. 7.

Then, the control portion 16 drives (vibrates) the piezoelectric element 11 corresponding to the calculated position coordinates of the vibrating display 13 at the step S203, and advances to a step S204. At the step S204, the control portion 16 determines whether or not the user has performed the input operation on the touch panel portion 15. The control portion 16 repeats this determination at the step S204 until the user performs the input operation on the touch panel portion 15. When determining that the user has performed the input operation on the touch panel portion 15 at the step S204, the control portion 16 advances to a step S205.

At the step S205, the control portion 16 determines whether or not the user has the input operation on the position of the touch panel portion 15 to be operated. When determining that the user has performed the input operation on the position of the touch panel portion 15 to be operated (the user has correctly performed the input operation) at the step S205, the control portion 16 advances to a step S206. At the step S206, the control portion 16 drives (vibrates) the piezoelectric element 11 in an OK pattern informing the user that he/she has correctly performed the input operation. The OK pattern is an example of the "first vibration pattern" in the present invention. In this OK pattern, the control portion 16 may singly vibrate only the piezoelectric element 11 corresponding to the position of the touch panel portion 15 on which the user has performed the input operation, or may unidirectionally or multidirectionally vibrate some of the plurality of piezoelectric elements 11.

When determining that the user has not performed the input operation on the position of the touch panel portion 15 to be operated (the user has erroneously performed the input operation) at the step S205, on the other hand, the control portion 16 advances to a step S207. At the step S207, the control portion 16 drives (vibrates) the piezoelectric element 11 in an NG pattern informing the user that he/she has erroneously performed the input operation at the step S207. The NG pattern is an example of the "second vibration pattern" in the present invention. In this NG pattern, the control portion 16 may singly vibrate only the piezoelectric element 11 corresponding to the position of the touch panel portion 15 on which the user has performed the input operation, or may unidirectionally or multidirectionally vibrate some of the plurality of piezoelectric elements 11. In the NG pattern, the control portion 16 vibrates the piezoelectric element 11 in a vibration pattern different from the OK pattern.

At the aforementioned step S201, the control portion 16 may display an image (moving image) 2c shown in Fig. 8 on the display portion 2. In this case, the control portion 16 successively drives (vibrates) the corresponding piezoelectric element 11 along the track of the image 2c shown in Fig. 8. Thus, the user can realize the track of the moving image 2c through the vibration of the piezoelectric element 11.

According to this embodiment, as hereinabove described, the control portion 16 transmits the position of the touch panel portion 15 directly operated by the right hand of the user to the left hand of the user by vibrating the portion, corresponding to the operated position of the touch panel portion 15, of the vibrating display 13 grasped by the left hand of the user when the user has directly operated the touch panel portion 15 with his/her right hand. Thus, the user can sense the position of the touch panel portion 15 operated by his/her right hand from his/her left hand, whereby the control portion 16 can make the user not only sense that he/she has operated the touch panel portion 15 but also realize (recognize) which position of the touch panel portion 15 he/she has operated.

According to this embodiment, as hereinabove described, the control portion 16 transmits the position of the touch panel portion 15 directly operated by the right hand of the user to the left hand of the user by varying the vibration pattern of the portion, corresponding to the operated position of the touch panel portion 15, of the vibrating display 13 grasped by the right hand of the user in response to at least any of the coordinates of the operated position of the touch panel portion 15, the pressing force and the contents of the operation when the user has directly operated the touch panel portion 15 with his/her right hand. Thus, the user can sense the vibration pattern responsive to the coordinates of the position, the pressure and/or the contents of the operation from his/her left hand, thereby realizing the position operated by himself/herself, the strength of the pressing force and/or the contents of the operation. Consequently, the operability of the portable terminal 100 can be improved.

According to this embodiment, as hereinabove described, the control portion 16 transmits the position of the touch panel portion 15 subjected to the input operation to the left hand of the user by vibrating the portion, corresponding to the position directly subjected to the input operation by the right hand of the user, of the vibrating display 13 in the OK pattern informing the user that he/she has correctly performed the input operation when the user has correctly directly performed the input operation on the touch panel portion 15 with his/her right hand while vibrating the portion, corresponding to the position directly subjected to the input operation by the right hand of the user, of the vibrating display 13 in the NG pattern, different from the OK pattern, informing the user that he/she has erroneously performed the input operation when the user has erroneously directly performed the input operation on the touch panel portion 15 with his/her right hand. Thus, the vibrating display 13 vibrates in the OK pattern when the user has correctly performed the input operation on the touch panel portion 15, whereby the user can determine that he/she has correctly performed the input operation by realizing (recognizing) the OK pattern. When the user has erroneously performed the input operation on the touch panel portion 15, on the other hand, the vibrating display 13 vibrates in the NG pattern, whereby the user can determine that he/she has erroneously performed the input operation by realizing (recognizing) the NG pattern.

According to this embodiment, as hereinabove described, the control portion 16 varies the frequency of the voltage or the current applied to the vibrating display 13 thereby varying the vibration in the OK pattern from that in the NG pattern. Thus, the user can easily realize (recognize) the vibration pattern through the frequency of the voltage or the current applied to the vibrating display 13.

According to this embodiment, as hereinabove described, the control portion 16 vibrates the portion, corresponding to the operated position of the touch panel portion 15, of the vibrating display 13 grasped by the left hand of the user in response to the magnitude of the pressing force when the user has directly or indirectly pressed the touch panel portion 15 with his/her right hand so that the user can sense the vibration pattern responsive to the magnitude of the pressing force from his/her left hand, whereby the user himself/herself can realize the magnitude of his/her pressing force.

According to this embodiment, as hereinabove described, the control portion 16 vibrates the portion, corresponding to the operated position of the touch panel portion 15, of the vibrating display 13 grasped by the left hand of the user in response to the magnitude of the pressing force with reference to the previously set reference value, whereby the user can sense the vibration pattern responsive to the magnitude of the pressing force from his/her left hand with reference to the previously set reference value.

According to this embodiment, as hereinabove described, the display portion 2 displays the set screen (confirmation screen) on which the user can previously set the reference value of the magnitude of the vibration of the vibrating display 13, whereby the user can easily set the reference of the magnitude (strong or weak) of the vibration of the vibrating display 13 while observing the set screen (confirmation screen) displayed on the display portion 2.

According to this embodiment, as hereinabove described, the control portion 16 transmits the position of the touch panel portion 15 operated by the right hand of the user to the left hand of the user by vibrating the portion, corresponding to the operated position of the touch panel portion 15, of the vibrating display 13 grasped by the left hand of the user with the frequency of at least about 200 Hz when the user has directly operated the touch panel portion 15 with his/her right hand. Thus, the control portion 16 can vary the feeling of the vibration transmitted to the left hand of the user as compared with a case of vibrating the vibrating display 13 with a frequency of less than 200 Hz.

According to this embodiment, as hereinabove described, the control portion 16 controls the vibrating display 13 to transmit the position to be operated to the user by previously vibrating the portion, corresponding to the "Yes" button of the selection screen 2b, the "No" button of the selection screen 2b or the image (moving image) 2c displayed on the display portion 2, of the vibrating display 13 grasped by the left hand of the user. Thus, the portion, corresponding to the "Yes" button of the selection screen 2b, the "No" button of the selection screen 2b or the image (moving image) 2c displayed on the display portion 2, of the vibrating display 13 so previously vibrates that the user can determine the position of the display portion 2 to be operated without observing the portion (contents) displayed on the display portion 2, for example.

According to this embodiment, as hereinabove described, the control portion 16 vibrates the portion, corresponding to the operated position of the touch panel portion 15, of the vibrating display 13 grasped by the left hand of the user in the vibration pattern different from that for transmitting the position to be operated to the user when the user has directly or indirectly operated the portion corresponding to the image with his/her right after transmitting the position to be operated to the user by previously vibrating the portion, corresponding to the image displayed on the display portion 2, of the vibrating display 13 grasped by the right hand of the user so that the vibration pattern is varied before and after the user has operated the touch panel portion 15, whereby the user can easily determine whether or not he/she has operated the touch panel portion 15 by realizing (recognizing) the different vibration pattern.

According to this embodiment, as hereinabove described, the control portion 16 transmits the position of the touch panel portion 15 directly operated by the right hand of the user to the left hand of the user by vibrating the portion, corresponding to the operated position of the touch panel portion 15, of the vibrating display 13 arranged on the back side grasped by the left hand of the user when the user has directly operated the touch panel portion 15 with his/her right hand. Thus, the control portion 16 can reliably transmit the vibration of the vibrating display 13 arranged on the back side to the left hand of the user grasping the vibrating display 13, whereby the user can correctly realize (recognize) which position of the touch panel portion 15 he/she has operated.

According to this embodiment, as hereinabove described, the control portion 16 transmits the position of the touch panel portion 15 directly operated by the right hand of the user to the left hand of the user by vibrating the piezoelectric element 11, corresponding to the operated position of the touch panel portion 15, of the vibrating display 13 grasped by the left hand of the user when the user has directly operated the touch panel portion 15 with his/her right hand. Thus, the user can sense the position of the touch panel portion 15 operated by his/her right hand from his/her left hand through the vibration of the corresponding piezoelectric element 11, whereby the user can realize (recognize) that he/she has operated the touch panel portion 15.

According to this embodiment, as hereinabove described, the control portion 16 can vary the size of the vibrating region of the vibrating display 13 by singly vibrating one of the plurality of piezoelectric elements 11 of the vibrating display 13 or combinationally vibrating some of the piezoelectric elements 11, whereby the control portion 16 can make the user realize (recognize) that he/she has operated the touch panel portion 15 by varying the size of the vibrating region of the vibrating display 13.

According to this embodiment, as hereinabove described, the plurality of piezoelectric elements 11 are arranged in the form of a matrix over the entire region of the touch panel portion 15 in plan view so that the position of the touch panel portion 15 operated by the user and the position of vibration of the corresponding piezoelectric element 11 can substantially coincide with each other in plan view, whereby the user can correctly realize (recognize) which position of the touch panel portion 15 he/she has operated.

According to this embodiment, as hereinabove described, the control portion 16 vibrates the piezoelectric element 11 of the vibrating display 13 coinciding with the position of the touch panel portion 15 on which the user has performed the input operation in plan view, whereby the user can correctly realize (recognize) which position of the touch panel portion 15 he/she has operated.

Although the present invention has been described and illustrated in detail, it is clearly understood that the same is by way of illustration and example only and is not to be taken by way of limitation, the spirit and scope of the present invention being limited only by the terms of the appended claims.

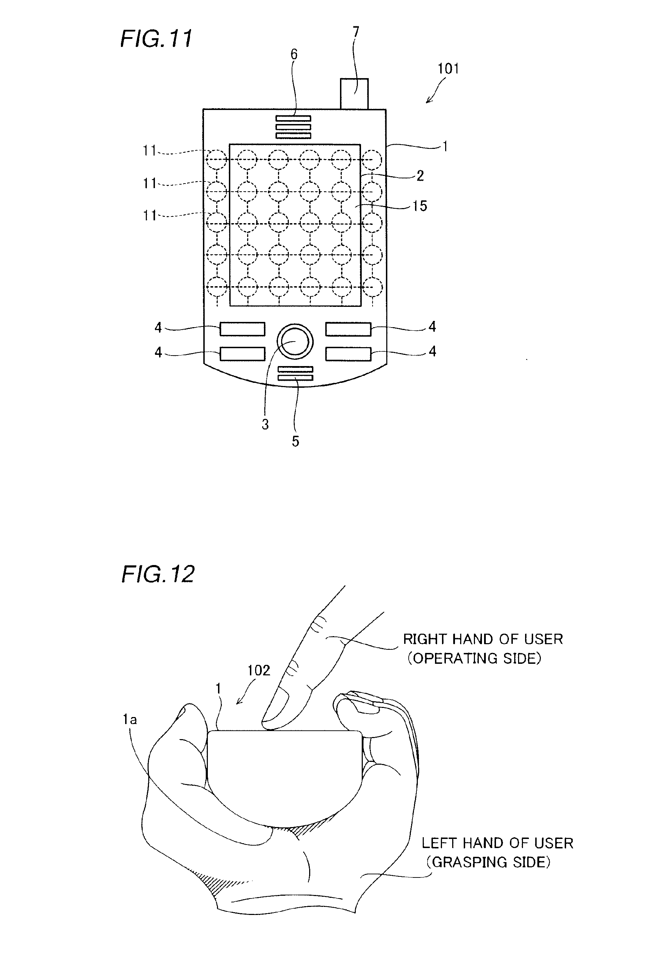

For example, while the portable terminal 100 is so formed that the position of the touch panel portion 15 subjected to the input operation and the vibrating piezoelectric element 11 substantially coincide with each other in plan view in the aforementioned embodiment, the present is not restricted to this, but the position of the touch panel portion 15 subjected to the input operation and the vibrating piezoelectric element 11 may not substantially coincide with each other in plan view so far as the position of the touch panel portion 15 subjected to the input operation and the vibrating piezoelectric element 11 are associated with each other. For example, the portable terminal can be so formed that a side portion of the position of the touch panel portion subjected to the input operation vibrates when the user has performed the input operation on a central portion of the touch panel portion. In this case, piezoelectric elements 11 must be arranged on a side portion of a portable terminal 101 in addition to those arranged on a back side of the portable terminal 101, as shown in Fig. 11.

While the present invention is applied to the portable terminal 100 having a general shape in the aforementioned embodiment, the present is not restricted to this, but a back surface 1a of a housing 1 of a portable terminal 102 may be semicylindrically shaped (convexed toward the palm of the user grasping the portable terminal 102) along the palm of the user, as shown in Fig. 12. Thus, the back surface 1a of the housing 1 of the portable terminal 102 is in close contact with the palm of the user grasping the portable terminal 102, whereby vibration of a vibrating display 13 can be reliably transmitted to the palm of the user.

While the present invention is applied to the capacitance type touch panel portion 15 in the aforementioned embodiment, the present is not restricted to this, but is also applicable to a touch panel portion of a type other than the capacitance type.

While the piezoelectric elements 11 are arranged in the form of a matrix in plan view in the aforementioned embodiment, the present is not restricted to this, but the piezoelectric elements 11 may alternatively be arranged in the form of a hound's tooth, for example, other than the matrix in plan view.

While the control portion 16 varies the magnitude of the vibration of the piezoelectric element 11 in response to the magnitude (wavelength) of the frequency in the aforementioned embodiment, the present is not restricted to this, but the control portion 16 may alternatively vary the magnitude of the vibration of the piezoelectric element 11 in response to the amplitude of the frequency.

## Claims

1. A portable terminal (100) comprising:
a touch panel portion (15) for allowing a user to directly or indirectly perform an input operation with one of his/her hands;
a vibrating portion (13) grasped by the other hand of said user for generating vibration thereby notifying the other hand of said user that he/she has directly or indirectly operated said touch panel portion with one of his/her hands; and
a control portion (16) for transmitting a position of said touch panel portion directly or indirectly operated by one of the hands of said user to the other hand of said user by vibrating a portion, corresponding to said operated position of said touch panel portion, of said vibrating portion grasped by the other hand of said user when said user has directly or indirectly operated said touch panel portion with one of his/her hands.

2. The portable terminal according to claim 1,
wherein
said control portion is so formed as to transmit said position of said touch panel portion directly or indirectly operated by one of the hands of said user to the other hand of said user by varying a vibration pattern of a portion, corresponding to said operated position of said touch panel portion, of said vibrating portion grasped by the other hand of said user in response to at least any of the coordinates of said operated position of said touch panel portion, pressing force and operation contents when said user has directly or indirectly operated said touch panel portion with one of his/her hands.

3. The portable terminal according to claim 1,
wherein
said control portion is so formed as to transmit a position of said touch panel portion subjected to said input operation to the other hand of said user by vibrating a portion, corresponding to said position of said touch panel portion directly or indirectly subjected to said input operation by one of the hands of said user, of said vibrating portion in a first vibration pattern informing said user that he/she has correctly performed said input operation when said user has correctly directly or indirectly performed said input operation on said touch panel portion with one of his/her hands while vibrating said portion, corresponding to said position of said touch panel portion directly or indirectly subjected to said input operation by one of the hands of said user, of said vibrating portion in a second vibration pattern, different from said first vibration pattern, informing said user that he/she has erroneously performed said input operation when said user has erroneously directly or indirectly performed said input operation on said touch panel portion with one of his/her hands.

4. The portable terminal according to claim 3,
wherein
said control portion is so formed as to vary said first vibration pattern and said second vibration pattern from each other by varying the frequency of a voltage or a current applied to said vibrating portion.

5. The portable terminal according to claim 2,
wherein
said control portion is so formed as to vibrate a portion, corresponding to a pressed position of said touch panel portion, of said vibrating portion grasped by the other hand of said user in response to the magnitude of said pressing force when said user has directly or indirectly pressed said touch panel portion with one of his/her hands.

6. The portable terminal according to claim 5,
wherein
said control portion is so formed as to vibrate said portion, corresponding to said operated position of said touch panel portion, of said vibrating portion grasped by the other hand of said user in response to the magnitude of said pressing force with reference to a previously set reference value.

7. The portable terminal according to claim 6, further comprising a display portion (2) for displaying an image, wherein
said control portion is so formed as to display a set screen on which said user can previously set a reference value of the magnitude of vibration of said vibrating portion on said display portion.

8. The portable terminal according to claim 1,
wherein
said control portion is so formed as to transmit said position of said touch panel portion operated by one of the hands of said user to the other hand of said user by vibrating said portion, corresponding to said operated position of said touch panel portion, of said vibrating portion grasped by the other hand of said user with a frequency of at least 200 Hz when said user has directly or indirectly operated said touch panel portion with one of his/her hands.

9. The portable terminal according to claim 1, further comprising a display portion (2) for displaying an image, wherein
said control portion is so formed as to control said vibrating portion to transmit a position to be operated to said user by previously vibrating a portion, corresponding to said image displayed on said display portion, of said vibrating portion grasped by the other hand of said user.

10. The portable terminal according to claim 9,
wherein
said control portion is so formed as to vibrate said portion, corresponding to said operated position of said touch panel portion, of said vibrating portion grasped by the other hand of said user in a vibration pattern different from that for transmitting said position to be operated to said user when said user has directly or indirectly operated said portion corresponding to said image with one of his/her hands after transmitting said position to be operated to said user by previously vibrating said portion, corresponding to said image displayed on said display portion, of said vibrating portion grasped by the other hand of said user.

11. The portable terminal according to claim 1,
wherein
said vibrating portion is arranged on a back side grasped by the other hand of said user, and
said control portion is so formed as to transmit said position of said touch panel portion directly or indirectly operated by one of the hands of said user to the other hand of said user by vibrating a portion, corresponding to said operated position of said touch panel portion, of said vibrating portion arranged on said back side grasped by the other hand of said user when said user has directly or indirectly operated said touch panel portion with one of his/her hands.

12. The portable terminal according to claim 1,
wherein
said vibrating portion includes a plurality of vibrating elements (11) arranged on said touch panel portion, and
said control portion is so formed as to transmit said position of said touch panel portion directly or indirectly operated by one of the hands of said user to the other hand of said user by vibrating said vibrating elements, corresponding to said operated position of said touch panel portion, of said vibrating portion grasped by the other hand of said user when said user has directly or indirectly operated said touch panel portion with one of his/her hands.

13. The portable terminal according to claim 12,
wherein
said control portion is so formed as to singly vibrate one of said plurality of vibrating elements of said vibrating portion or to combinationally vibrate some of said plurality of vibrating elements.

14. The portable terminal according to claim 12,
wherein
said plurality of vibrating elements are arranged in the form of a matrix over the entire region of said touch panel portion in plan view.

15. The portable terminal according to claim 12,
wherein
said control portion is so formed as to vibrate the corresponding one of said vibrating elements of said vibrating portion coinciding with said position of said touch panel portion on which said user has performed said input operation in plan view.
